## Europäisches Patentamt
## European Patent Office
## Office européen des brevets

(19)

(11) Veröffentlichungsnummer: **0 206 985**
**B1**

(12) **EUROPÄISCHE PATENTSCHRIFT**

(45) Veröffentlichungstag der Patentschrift:
29.03.89

(51) Int. Cl.⁴: **B 65 G 21/20**, B 65 G 47/31

(21) Anmeldenummer: **86810230.2**

(22) Anmeldetag: **29.05.86**

(54) Vorrichtung zum Vereinzeln von aneinander anliegenden Einzelstücken.

(30) Priorität: **26.06.85 CH 2736/85**

(43) Veröffentlichungstag der Anmeldung:
**30.12.86 Patentblatt 86/52**

(45) Bekanntmachung des Hinweises auf die Patenterteilung:
**29.03.89 Patentblatt 89/13**

(84) Benannte Vertragsstaaten:
**CH DE FR GB IT LI NL SE**

(56) Entgegenhaltungen:
**DE-A-2 346 407**
**GB-A-1 545 058**
**GB-A-2 071 063**

**RESEARCH DISCLOSURE, Nr. 209, September 1981,
Seite 350, Industrial Opportunities Ltd., Homewell,
Havant, Hampshire, GB; Nr. 20923: "Vacuum belt"**

(73) Patentinhaber: **SIG Schweizerische Industrie-
Gesellschaft, CH- 8212 Neuhausen am Rheinfall
(CH)**

(72) Erfinder: **Deutschländer, Gert, Charlottenweg 21,
D-8212 Neuhausen am Rheinfall (DE)**

(74) Vertreter: **White, William, Isler AG Patentanwalts-
Bureau Walchestrasse 23, CH- 8006 Zürich (CH)**

## Beschreibung

Die vorliegende Erfindung betrifft eine Vorrichtung gemäss Oberbegriff des unabhängigen Patentanspruchs 1.

Es ist bekannt, dass bei der Verpackung, zwecks Ausnützung der vollen Leistung einer Maschine, die zu verpackenden Gegenstände im Takt zugeführt werden müssen, der auf den Arbeitstakt der Maschine eingestellt werden kann. Damit diese Bedingung erfüllt werden kann, ist es üblich bei der Zufuhr der Einzelstücke ein Förderorgan vorzusehen, durch das der Abstand zwischen sich folgenden Einzelstücken zu verändern, insbesondere zu vergrössern ist. Dazu wird einem ersten Förderorgan ein zweites nachgeschaltet, das mit grösserer Geschwindigkeit läuft als das Zufuhrorgan, um so die Abstände zu vergrössern.

Eine erste derartige Anordnung ist in der DE-A-2 346 407 beschrieben. Auf einem ersten Förderband werden die Einzelstücke in sich berührender Weise einem zweiten Förderband zugeführt, das eine grösser Fördergeschwindigkeit aufweist. Damit haben die Einzelstücke automatisch einen Abstand voneinander. Ein drittes Förderorgan ist mit Mitnehmern versehen und bringt die Einzelstücke in einen genauen Abstand, bevor sie dann der Verpackungsmaschine zugeführt werden. Ein Sensor zwischen erstem und zweitem Förderband wird zeitweilig aktiviert, wobei die Zeitspanne der Aktivierung der Länge der Einzelstücke bei der Transportgeschwindigkeit auf dem ersten Förderband entspricht. Mit dieser Längenmessung wird unter Berücksichtigung der Phasenlage des dritten Förderorgans die Transportgeschwindigkeit des ersten Förderbandes gesteuert.

Wenn die Einzelstücke Schokoladestücke mit unregelmässigen Formen und mit Längentoleranzen von $\pm$ 10 % sind, kann eine solche dynamische Steuerung zu fehlerhaften Abständen führen, durch die die Leistung der Verpackungsmaschine nicht voll ausgenützt werden kann. Überdies kann eine solche Regelung nur während des Betriebes in eingelaufenem Zustand wirkungsvoll arbeiten, bei Leistungssprüngen, wie Maschinenstopp, Notstopp und rasches Anfahren könnte die Betriebssicherheit bei einer Verpackungsfrequenz von wenigstens 200 Stücken pro Minute ungenügend sein.

In einem weiteren Vorschlag gemäss der CH-A-619 667 ist zwischen zweitem und drittem Förderorgan, also zwischen dem langsam laufenden Förderband und dem Zufuhrförderorgan zur Verpackungsmaschine mit den Mitnehmern eine Abstellplatte vorhanden. Mit dieser Abstellplatte arbeitet ein Sensor zusammen, der mit einem mit dem dritten Förderorgan synchronisierten Grenzschalter die Abstände der vereinzelten Gegenstände überwacht und damit das zweite Förderorgan steuert. Nachteilig an einer solchen Vorrichtung ist, dass bei Notstopp die Gegenstände trotzdem, infolge ihrer Trägheit unkontrolliert und in unzulässiger Weise weiterwandern, so dass ein automatischer Start nicht mehr störungsfrei möglich sein kann. Die Abstellplatte stellt eine Diskontinuität im Förderweg dar und reduziert durch diskontinuierliche Förderungen der Einzelstücke und erhöhten Abrieb die Betriebssicherheit der Vorrichtung. Zudem erfolgt die Vereinzelung nur durch das dritte Förderorgan, mit dem die Gegenstände von der Abstellplatte entnommen werden. Dies bewirkt einen momentanen Stillstand mit nachfolgender Beschleunigung der Gegenstände, so dass die Maschinenleistung auf die Art der Gegenstände bemessen werden muss, und bei zerbrechlichem Gut kann daher ungefähr eine Leistung von 200 Stück pro Minute erreicht werden.

Es ist daher eine Aufgabe der Erfindung eine Vorrichtung zur Vereinzelung von Gegenständen zu schaffen, mit der die Gegenstände mit verschiedenen Längen verarbeitbar sind, ohne dass grosse Umstellungen nötig sind, und Gegenstände auch mit unregelmässig geformten Oberflächen ebensogut verarbeitet werden können, wie gleichmässig geformte Gegenstände, wobei die Maschinenleistung noch weit gesteigert werden soll. Die Betriebssicherheit soll dabei derart sein, dass nach einem Maschinenstopp immer wieder automatisch und ohne Handarbeit angefahren werden kann.

Erfindungsgemäss wird dies durch die Merkmale im kennzeichnenden Teil des unabhängigen Patentanspruchs 1 erreicht.

Ein Ausführungsbeispiel der Erfindung wird nachfolgend anhand der Zeichnung erläutert. Es zeigen:

Fig. 1　eine schematische Darstellung einer Vorrichtung zur Vereinzelung nach der Erfindung in Verbindung mit einer Verpackungsmaschine,

Fig. 2　einen Ausschnitt gemäss der eingekreisten Stelle A in Fig. 1 in vergrössertem Maßstab und in einer Schnittansicht gemäss der Schnittlinie II - II in Fig. 3,

Fig. 3　eine Schnittansicht gemäss der Schnittlinie III - III in Fig. 2, und

Fig. 4　ein Blockschema für die elektrische Schaltungsanordnung zur Steuerung der Antriebsmotoren in Fig. 1.

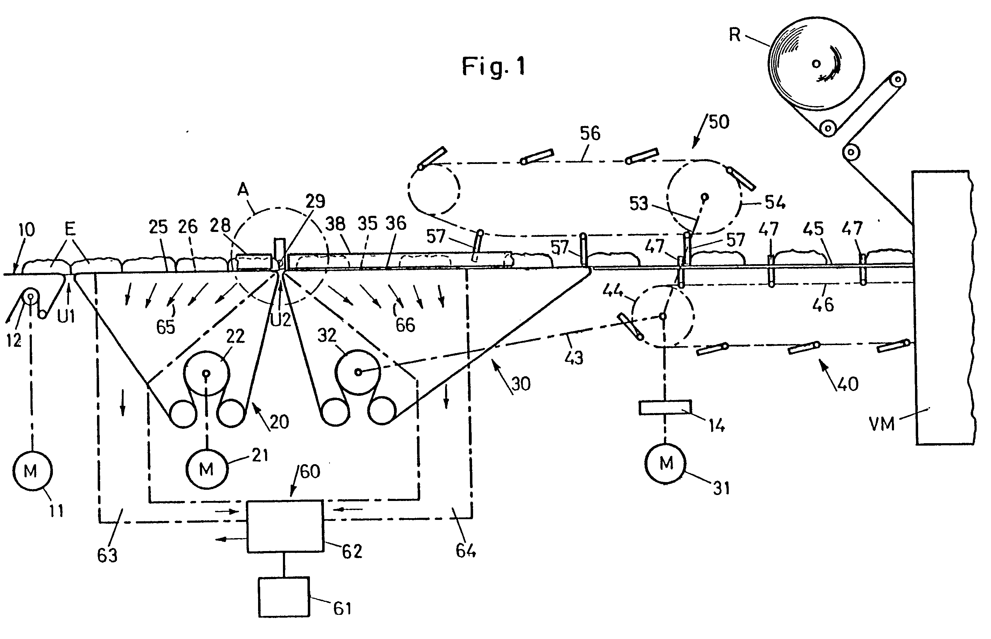

In der Anordnung gemäss Fig. 1 werden die Einzelstücke E von einem Fabrikationstransportband 10 einer ersten Übergangsstelle U1 zum ersten Förderorgan 20 zugeführt. Dieses erste Förderorgan 20 hat die Aufgabe die Gegenstände zu sammeln bzw. zu stauen. Am Ende dieses ersten Förderorgans 20 befindet sich die zweite Übergangsstelle U2 zum zweiten Förderorgan 30, mit dem die Einzelstücke E vereinzelt werden. Das dritte Förderorgan 40 ist als Zuführkette ausgebildet und bringt die Einzelstücke E mit bestimmte Geschwindigkeit und unter genau eingehaltenen Abständen zur Verpackungsmaschine VM. Zwischen zweitem und drittem Förderorgan 30, 40 befindet sich ein viertes Förderorgan 50 und zwar über dem Transportweg der Einzelstücke E.

Als Förderorgane 10, 20 und 30 sind Transportbänder vorgesehen, die durch Motoren 11, 21, 31 angetrieben sind. In der Zeichnung sind die Bandführungen für die Einhaltung der Friktionsumschlingung an den Antriebstrommeln 12, 22, 32 andeutungsweise dargestellt. Während die Motoren 11 und 21 lediglich je nur ein Förderorgan 10, 20 anzutreiben haben, ist der Motor 31 für den Antrieb der Verpackungsmaschine VM und der drei Förderorgane 30, 40, 50 vorgesehen und damit sind die Verpackungsmaschine VM, die Antriebskettenräder 44, 54 des dritten Förderorgans 40 und des vierten Förderorgans 50 und die Antriebstrommel 23 des zweiten Förderorgans 30 untereinander gekoppelt, wie durch die strichliert gezeichneten Linien 43, 53, 73 dargestellt ist.

Beim ersten Förderorgan 20 und beim zweiten Förderorgan 30 sind eine Absaugvorrichtung 60 zum Absaugen von Luft aus dem Gebiet der Förderbänder vorhanden.

Diese Absaugvorrichtung 60 besteht aus einem Antriebsmotor 61, der mit einem Ventilator 62 gekoppelt ist. Luftkanäle 63, 64 sind mit strichlierten Linien dargestellt. Damit wird Luft einerseits gemäss Pfeil 65 vom ersten Förderorgan 20 und anderseits gemäss Pfeil 66 vom zweiten Förderorgan 30 angesaugt.

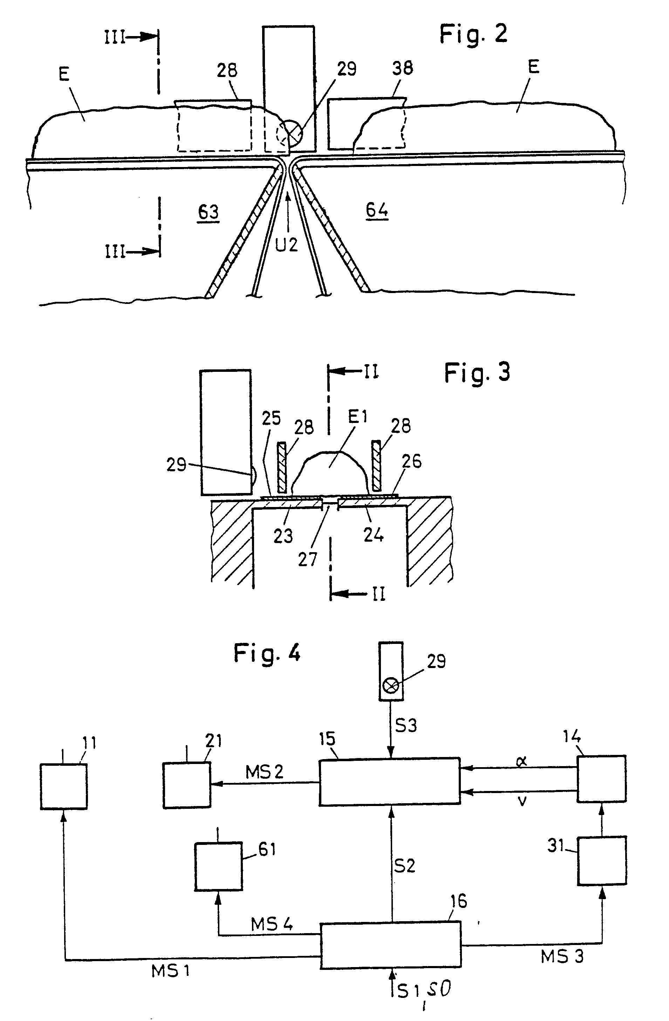

In Fig. 3 ist beispielsweise eine Stelle des ersten Förderorgans 20 dargestellt. Das Förderorgan 20 besteht aus zwei auf einer Bandauflage 23, 24 gleitenden Förderbändern 25, 26. Die beiden Bandauflagen 23, 24 sind durch einen Schlitz 27 voneinander getrennt und auch die beiden Förderbänder 25, 26 haben einen entsprechenden Abstand voneinander. Ein auf den Förderbändern 25, 26 liegendes Einzelstück E1 wird durch den Unterdruck im Luftkanal 63 unter den beiden Bandauflagen 23, 24 durch den darüber wirkenden atmosphärischen Druck auf bis in den Umlenkbereich die Förderbänder 25, 26 gedrückt.

Es hat sich gezeigt, dass die Einzelstücke nicht mit einer ebenen Fläche auf den Transportbändern 25, 26 aufliegen müssen, sondern, dass es genügt, wenn sie beispielsweise mit drei Spitzen aufliegen aber sonst einen Abstand haben, wie es oftmals bei Riegeln mit von einem Schokoladeguss überzogenen Körnern anzutreffen ist.

Untersuchungen haben bei solchen Riegeln von etwa 120 mm Länge, 30 mm Breite und 20 mm Höhe, bei einem Gewicht von etwa 50 g, gezeigt, dass die Beschleunigungswerte ohne Unterdruck bei etwa 1 m/sec$^2$ betragen darf, ohne dass sich die Riegel bei Stopp oder bei Anfahren noch bewegen. Mit einem Unterdruck von 0,1 bar konnten jedoch bei Beschleunigungen von über 100 m/sec$^2$ kaum Verschiebungen festgestellt werden.

Eine kritische Stelle ist die Übergangsstelle U2 zwischen dem langsamer laufenden ersten Förderorgan 20 und dem rascher laufenden zweiten Förderorgan 30, weil hier die Einzelstücke E, wenn sie noch zusammenhängend sind, getrennt, aber auf jeden Fall vereinzelt werden müssen. Dabei ist es wichtig, dass die Übergabe in kontrollierter Weise geschieht und nicht über ein passives Element, wie es beispielsweise eine Platte zur Überbrückung eines Zwischenraumes zwischen den oberen Trumen der sich folgenden ersten und zweiten Förderorgane 20, 30 wäre.

Die beiden sich gegenüberstehenden Endpartien der beiden Förderorgane 20, 30 sind gemäss Fig. 2 als Umlenk-Kanten ausgebildet, so dass die Einzelstücke E direkt vom Förderorgan 20 zum Förderorgan 30 geschoben werden. Wie in Fig. 1 durch die mit strichlierten Linien angedeuteten Kanäle 63, 64 wirkt der Unterdruck auf der ganzen Länge des ersten Förderorgans 20 und beim zweiten Förderorgan 30 von dieser Umlenkkante aus bis zu einer Stelle, an der das vierte Förderorgan 50 den Transport übernimmt.

An dieser Übergangsstelle U2 ist eine Lichtschranke 29 angeordnet und seitliche Führungen 28 und 38 dienen gemäss Fig. 2 dazu, dass Einzelstücke E infolge einer sich ändernden Geschwindigkeit nicht ausbrechen können, z. B. bei Notstopp und raschem Anfahren.

Das dritte Transportorgan 40 bildet das Zufuhrelement für die Verpackungsmaschine VM. Diese Verpackungsmaschine VM ist allgemein bekannt und braucht deshalb an dieser Stelle nicht besonders beschrieben zu werden. In Fig. 1 sind dazu noch die Rolle R für das Einschlagmaterial und in üblicher Weise eine Spannanordnung skizziert. Dieses dritte Transportorgan 40 isteine unter dem Transportweg 45 angeordnete Transportkette 46 mit drehbar an dieser befestigten Mitnehmern 47, die auf dem Weg zum eingezeichneten Kettenrad 44 an die Transportkette 46 angelenkt sind und kurz vor dem Arbeitsweg im oberen Trum aufgestellt werden. In üblichem Aufbau sind für diese Steuerungen Steuerkurven und Kurvenabtaster benützt.

Ein viertes Transportorgan 50 befindet sich oberhalb des Transportweges und ist ebenfalls als Kettenförderer mit einer Transportkette 56 und an dieser angelenkten Mitnehmern 57 ausgebildet. Wie in Fig. 1 deutlich dargestellt, werden die Einzelstücke E durch die Mitnehmer 57 noch auf dem zweiten Transportorgan 30 erfasst. Damit eine allfällige Verschiebung zwischen einem Einzelstück und einem Mitnehmer ausgeglichen werden kann, ist der Unterdruckkanal 64 nur bis zu der Stelle wirksam, an der die Übernahme erfolgt.

Im Blockschema Fig. 4 sind zwei Steuerschaltungen 15 und 16 zu erkennen. Die Steuerschaltung 16 wird mit erstem Steuersignal S0 von Hand eingeschaltet, womit die Motoren 11, 21, 61 gestartet werden. Durch zweites Steuersignal S1 z. B. gemäss unserem CH-Patent Nr. 598 996 wird Motor 31 gestartet und in der Drehzahl gesteuert. In Abhängigkeit von der Motordrehzahl des Motors 31 wird mit einem Taktgeber-Tachogenerator 14 eine Winkelinformation α und anderseits eine Geschwindigkeitsinformation verzeugt und der Steuerschaltung 15 zugeführt, die aber auch noch ein Steuersignal S2 von der Steuerschaltung 16 und das Steuersignal S3 von der Lichtschranke 29 erhält. Aus diesen Signalen wird in der Steuerschaltung die Transportgeschwindigkeit des ersten Transportorgans 20 bestimmt und daraus die Staumenge, die sich auf diesem Organ ansammelt.

Die Funktionsweise ist die folgende. Der Motor 31 in Fig. 1 treibt ausser der Verpackungsmaschine VM die Zufuhrkette 46 des dritten Transportorgans 40, die Oberkette 56 des vierten Transportorgans 50 und das Beschleunigungsband des zweiten Transportorgans 30 mit zueinander festen Übersetzungsverhältnissen an.

Das Fabrikationsband 10 ist dauernd in Betrieb und fördert die Einzelstücke E die von der Produktion kommen auf das Stauband des ersten Förderorgans 20.

Dieses Stauband wird durch den Motor 21 angetrieben, der gemäss Fig. 4 von der Steuerschaltung 15 aus gesteuert wird.

Beim Anfahren fördert das Stauband des ersten Förderorgans 20, auch wenn die Verpackungsmaschine VM stillstehen sollte solange, bis das erste Einzelstück die Lichtschranke 29 erreicht und damit ein Signal S3 erzeugt wird. Nun wird das erste Förderorgan 20 angehalten, und, weil dieses erste Einzelstück, wie auch alle übrigen auf diesem Förderorgan befindlichen Einzelstücke durch den Unterdruck im Kanal 63 bwirkt, auf das Band gepresst wird, wird auch dieses sofort gestoppt.

Motor 21 des ersten Förderorgans 20 wird beim Start der Verpackungsmaschine VM mit Taktgeber-Tachogenerator 14 so gesteuert, dass das erwähnte vorderste Einzelstück im richtigen Zeitpunkt auf das zweite Förderorgan 30 gebracht wird, wo es ebenfalls durch den Unterdruck auf das Förderband gepresst wird und damit sofort beschleunigt wird. Damit gelangt dieses sowie auch alle folgenden Einzelstücke taktgerecht zur Aufnahmestelle des vierten Förderorgans.

Bei einem normalen Betrieb der Verpackungsmaschine VM, die beispielsweise gemäss der CH-A-598 996 ausgebildet sein kann, wird die Produktionsleistung von 0 bis etwa 600 Stück Minute angepasst. Beschleunigungen und Verzögerungen bei Anfahrten, Notstopps oder sonstigen Stopps bewirken höchstens eine sehr geringe Lageverschiebung der Einzelstücke, die aber schon vor dem Einlaufen in das Förderorgan 40 durch die Oberkette des vierten Förderorgans 50 ausgeglichen wurde.

Somit kann die Verpackungsmaschine auf eine sehr hohe Maschinenleistung ausgerichtet werden. Die Betriebssicherheit ist in jeder möglichen Phase gewährleistet. Der Transport auch beim Anfahren nach z. B. einem Notstopp, geschieht maschinensynchron. Für Umstellungen in der Produkteart, beispielsweise Riegel von 40 mm Länge anstelle von solchen von 120 mm Länge, werden ohne grosse Einrichtarbeiten ermöglicht. Die Längentoleranzen werden selbsttätig in weiten Grenzen ausgeglichen. Bekanntlich können durch den Überzug bedingt Einzelstücke zusammenhängen. Durch den Unterdruck und damit durch die Anpressung bewirkt, trennen sich solche Paare selbsttätig. Es gibt keine störende Verschmutzung infolge eines Abriebes, weil die Stücke genau mit der Transportgeschwindigkeit transportiert werden.

## Patentansprüche

1. Vorrichtung zum Vereinzeln von mindestens teilweise aneinander anliegend in einem Strom auf einem ersten Förderorgan (20) herangebrachten Einzelstücken (E), indem dieselben auf ein zweites Förderorgan (30) mit einer höheren Fördergeschwindigkeit überführt werden, und mit dem derart ausgebildeten Abstand zwischen zwei sich folgenden Einzelstücken mit einem dritten Förderorgan (40) mit Mitnehmern einer Verpackungsmaschine zugeführt werden, dadurch gekennzeichnet, dass sowohl beim ersten Förderorgan (20) als auch beim zweiten Förderorgan (30) eine Anordnung (60) zum Absaugen von Luft zwecks Erzeugung eines auf die Einzelstücke einwirkenden und dieselben gegen die Förderorgane (20, 30) pressenden Druckes vorhanden ist, dass die Umlenkung der Transportbänder (25, 26; 35, 36) an der Übergabestelle vom ersten Transportorgan (20) zum zweiten Transportorgan (30) vom oberen Trum zum Rücklauftrum über im wesentlichen spitzwinkelige Umlenkbereiche erfolgt, und dass die Absaugöffnungen (27) in beiden Förderorganen (20, 30) bis zu diesen reichen.

2. Vorrichtung nach Patentanspruch 1, dadurch gekennzeichnet, dass das erste und das zweite Förderorgan (20, 30) je aus mindestens zwei parallelen Transportbändern besteht.

3. Vorrichtung nach Patentanspruch 2, dadurch gekennzeichnet, dass schlitzartig ausgebildete Absaugöffnungen (27) entlang einer Bandkante wenigstens eines Transportbandes (25, 26) angeordnet sind.

4. Vorrichtung nach Patentanspruch 2, dadurch gekennzeichnet, dass schlitzartig ausgebildete Absaugöffnungen (27) zwischen jeweils zwei Transportbändern (25, 26) angeordnet sind.

5. Vorrichtung nach Patentanspruch 1, dadurch gekennzeichnet, dass wenigstens bei der Übergabestelle vom ersten Transportorgan (20) zum zweiten Transportorgan (30) bei jedem Transportorgan (20, 30) jeweils seitliche Stückführungen (28, 38) vorhanden sind.

6. Vorrichtung nach einem der Patentansprüche 1 bis 5, dadurch gekennzeichnet, dass wenigstens im Bereich der Übergabestelle vom zweiten Förderorgan (30) zum dritten Förderorgan (40) ein viertes Förderorgan (50) mit Antreibsmitteln über dem Strom der Einzelstücke vorhanden ist, das mit von oben her in den Strom der vereinzelten Einzelstücke (E) eingreifenden Mitnehmern (57) versehen ist, und dass das genannte dritte Förderorgan (40) von unten in den Strom eingreifende Mitnehmer (47) hat.

7. Vorrichtung nach Patentanspruch 6, dadurch gekennzeichnet, dass die schlitzartigen Absaugöffnungen (27) im zweiten Förderorgan (30) höchstens bis zur Stelle an der die Mitnehmer (57) des vierten Förderorgans (50) in den Strom eingreifen, reichen.

8. Vorrichtung nach Patentanspruch 6 oder 7, dadurch gekennzeichnet, dass die Abstände der Mitnehmer (57) des vierten Förderorgans (50) verschieden von den Abständen der Mitnehmer des dritten Förderorgans (40) sind.

9. Vorrichtung nach Patentanspruch 8, dadurch gekennzeichnet, dass die Abstände der Mitnehmer (57) des vierten Förderorgans (50) grösser sind als die Abstände der Mitnehmer (47) des dritten Förderorgans (40).


## Claims

1. A mechanism for singling single pieces (E) being brought along resting at least partially against one another in a flow on a first conveyor member (20), by their being transferred to a second conveyor member (30) having a higher conveying speed and - at the spacing between two successive single pieces developed in that way - being fed to a packing machine by a third conveyor member (40) having strikers, characterized in that both in the case of the first conveyor member (20) and in the case of the second conveyor member (30) there is an arrangement (60) for the suction of air for the purpose of generating a pressure acting upon the single pieces and pressing them against the conveyor members (20, 30), that the deflection of the conveyor belts (25, 26; 35, 36) at the point of transfer from the first conveyor member (20) to the second conveyor member (30) is effected from the upper side to the return side via essentially acute-angled regions of deflection, and that the suction openings (27) in both conveyor members (20, 30) reach as far as the latter.

2. A mechanism as in Claim 1, characterized in that the first and second conveyor members (20, 30) each consists of at least two parallel conveyor belts.

3. A mechanism as in Claim 2, characterized in that suction openings (27) made like slots are arranged along one edge of the belt of at least one conveyor belt (25, 26).

4. A mechanism as in Claim 2, characterized in that suction openings (27) made like slots are arranged between every two conveyor belts (25, 26).

5. A mechanism as in Claim 1, characterized in that at least at the point of transfer from the first conveyor member (20) to the second conveyor member (30) there are guides (28, 38) for the pieces at each side of each conveyor member (20, 30).

6. A mechanism as in one of the Claims 1 to 5, characterized in that at least in the region of the point of transfer from the second conveyor member (30) to the third conveyor member (40) there is above the flow of single pieces a fourth conveyor member (50) having driving means, which is provided with strikers (57) which engage from above in the flow of singled single pieces (E), and that the said third conveyor member (40) has strikers (47) which engage in the flow from below.

7. A mechanism as in Claim 6, characterized in that the slotlike suction openings (27) in the second conveyor member (30) reach at most as far as the point at which the strikers (57) on the fourth conveyor member (50) engage in the flow.

8. A mechanism as in Claim 6 or 7, characterized in that the spacings of the strikers (57) on the fourth conveyor member (50) are different from the spacings of the strikers on the third conveyor member (40).

9. A mechanism as in Claim 8, characterized in that the spacings of the strikers (57) on the fourth conveyor member (50) are greater than the spacings of the strikers (47) on the third conveyor member (40).


## Revendications

1. Dispositif pour séparer des objets individuels (E) amenés en un flux sur un premier organe de transport (20) au moins partiellement dans des positions mutuellement contigues, en les faisant passer sur un second organe de transport (30) d'une vitesse de transport supérieure, et en les amenant à une machine d'emballage avec la distance ainsi formée entre deux objets successifs avec un troisième organe de transport (40) comportant des entraîneurs, caractérisé en ce qu'on prévoit, tant pour le premier organe de transport (20) que pour le second organe de transport (30), un agencement (60) pour aspirer de l'air pour produire une pression agissant sur les objets individuels et les appuyant contre les organes de transport (20, 30), en ce que la déviation des courroies transporteuses (25, 26; 35, 36) au point de transfert du premier organe de transport (20) au second organe de transport (30) du brin supérieur au brin rétrograde a lieu par l'intermédiaire de zones de déviation essentiellement à angle aigu, et en ce que les orifices d'aspiration (27) dans les deux organes de transport (20, 30) vont jusqu'à elles.

2. Dispositif selon la revendication 1, caractérisé en ce que le premier organe de transport et 1e second organe de transport (20, 30) comprennent chacun au moins deux courroies transporteuses parallèles.

3. Dispositif selon la revendication 2, caractérisé en ce que des ouvertures d'aspiration en forme de fentes (27) sont disposées le long d'un bord d'au moins une courroie transporteuse (25, 26)

4. Dispositif selon la revendication 2, caractérisé en ce que les ouvertures d'aspiration en forme de fentes (27) sont disposées chaque fois entre deux courroies transporteuses (25, 26).

5. Dispositif selon la revendication 1, caractérisé en ce qu au moins au point de transfert du premier organe de transport (20) au second organe de transport (30) on prévoit pour chaque organe de transport (20, 30) des guides d'objets latéraux (28, 38) respectifs.

6. Dispositif selon l'une des revendications 1 à 5, caractérisé en ce qu au moins dans la zone du point de transfert du second organe de transport (30) au troisième organe de transport (40), on prévoit un quatrième organe de transport (50) avec des moyens d'entraînement au-dessus du flux des objets individuels, qui comporte des entraîneurs (57) pénétrant, par le haut, dans le flux des objets individuels (3) séparés, et en ce que ledit troisième organe de transport (40) comporte des entraîneurs (47) pénétrant dans le flux par le bas.

7. Dispositif selon la revendication 6, caractérisé en ce que les ouvertures d'aspiration en forme de fentes (27) formées dans le second organe de transport (30) vont au plus jusqu'au point ou les entraîneurs (57) du quatrième organe de transport (50) pénètrent dans le flux.

8. Dispositif selon la revendication 6 ou 7, caractérisé en ce que les distances des entraîneurs (57) du quatrième organe de transport (50) sont différentes des distances des entraîneurs du troisième organe de transport (40).

9. Dispositif selon la revendication 8, caractérisé en ce que les distances des entraîneurs (57) du quatrième organe de transport (50) sont plus grandes que les distances des entraîneurs (47) du troisième organe de transport (40).

Fig. 1

Fig. 2

Fig. 3

Fig. 4